Europäisches Patentamt

European Patent Office

Office européen des brevets

(11) Numéro de publication : **0 284 535 B1**

# FASCICULE DE BREVET EUROPEEN

(12)

(45) Date de publication du fascicule du brevet :
**29.04.92 Bulletin 92/18**

⑤ Int. CI.⁵ : **B62K 3/02,** B62K 25/02,
B62K 21/02

(21) Numéro de dépôt : **88470003.0**

(22) Date de dépôt : **23.02.88**

�××

(54) **Bicyclette dont les roues sont fixées en porte à faux sur le cadre.**

(30) Priorité : **23.02.87 FR 8702456**

(43) Date de publication de la demande :
**28.09.88 Bulletin 88/39**

(45) Mention de la délivrance du brevet :
**29.04.92 Bulletin 92/18**

(84) Etats contractants désignés :
**BE DE ES FR GB IT LU NL**

(56) Documents cités :
**FR-A- 2 473 978
US-A- 4 170 369
US-A- 4 526 249**

(73) Titulaire : **Laiti, Michel
Résidence Lothaire 113, Rue Ducrocq
F-57070 Metz (FR)**
Titulaire : **Guillot, Jean Marie
5 rue Jean Moulin
F-54490 Piennes (FR)**

(72) Inventeur : **Laiti, Michel
Résidence Lothaire 113, Rue Ducrocq
F-57070 Metz (FR)**

(74) Mandataire : **Poupon, Michel
B.P. 421 3, rue Ferdinand Brunot
F-88011 Epinal Cédex (FR)**

EP 0 284 535 B1

**Description**

La présente invention concerne une bicyclette dont au moins la roue arrière est fixée en porte à faux sur les éléments qui constituent le cadre de la bicyclette, la partie arrière du cadre étant formée d'un bras qui lie la roue arrière au cadre, le bras étant fixé sur le boîtier de pédalier du cadre par soudage ou brasage, sa forme étant telle qu'elle permette le passage de la roue arrière et de la chaine, ledit bras recevant à son extrémité une douille soudée ou brasée dans laquelle vient se loger un roulement, ladite bicyclette comportant un frein arrière correspondant.

La fixation des roues sur le cadre d'une bicyclette est traditionnellement réalisée par l'intermédiaire d'une fourche avant qui oscille sur le cadre et d'une fourche arrière qui fait partie intégrante du cadre.

Traditionnellement, une roue de bicyclette tourne autour d'un axe et cet axe est fixé par ses deux extrémités aux bras de fourche avant pour la roue avant et aux haubans et bases du cadre qui constituent la fourche arrière. Un cadre de bicyclette est donc symétrique en ce qui concerne la fixation de roues.

Mis à part quelques procédés techniques compliqués, tel que par exemple le brevet US 4 170 369, il est impossible de déposer la roue arrière en laissant en place la chaîne de transmission de la bicyclette.

Il faut donc, à chaque démontage, manipuler celle-ci au risque de la dérégler, de dérégler le dérailleur et de fausser le centrage de la roue arrière ce qui entraîne un mauvais fonctionnement du frein arrière surtout lorsque celui-ci est un frein sur jante.

De plus, lorsque la bicyclette est équipée de freins à tambour dans les moyeux avant et arrière il faut, pour déposer une roue, démonter le système d'ancrage du flasque de frein et aussi dans certains cas la partie arrière du câble de frein.

De la même manière, le document EP-A-0 187 170 décrit une bicyclette dont la roue arrière est fixée en porte à faux, mais dans laquelle la roue arrière tourne sur deux roulements, l'entrainement étant opéré par des clavettes. De plus la chaîne est disposée dans un carter, ce qui est peu pratique pour l'entretien de bicyclettes dites "tout terrain". Enfin, cette bicyclette est trop complexe de conception et ne comporte pas de possibilité d'adaptation simple d'un changement de vitesses.

Le dispositif selon l'invention permet de remédier à des inconvénients de l'art antérieur.

Conformément à l'invention, ce résultat est obtenu avec une bicyclette du type ci-dessus, caractérisée en ce que le support de frein arrière est constitué de deux pattes de fixation fixées par une extrémité sur le tube de selle du cadre, à l'autre extrémité étant fixées deux douilles latérales traversées par une vis, à l'extrémité de cette vis se trouvant un épaulement sur lequel vient s'appuyer un écrou, ladite vis assurant la liaison entre les douilles latérales et une douille centrale, la liaison étant telle qu'elle assure une rotation d'angle $\gamma$ autour de l'axe xx' de la douille centrale et de la vis par rapport au cadre, le frein arrière sur jante venant se fixer sur ce mécanisme grâce à un axe qui traverse à la fois les pièces.

D'autres caractéristiques de mise en oeuvre de l'invention apparaîtront dans la description faite ci-après d'un certain nombre de modes de mise en oeuvre de l'invention, en référence aux dessins annexés dans lesquels :

   – la figure 1 représente en coupe un exemple de la partie arrière d'une bicyclette équipée du dispositif selon l'invention ;

   – la figure 2 représente en coupe un exemple de la partie arrière d'une bicyclette équipée d'une variante du dispositif selon l'invention ;

   – la figure 3 représente l'arrière d'une bicyclette équipée du dispositif selon l'invention et plus précisément un exemple de support oscillant de frein sur jante selon l'invention (il donne un exemple de l'amplitude du mouvement de l'axe support de frein) ;

   – la figure 4 représente en coupe un exemple de la partie arrière d'une bicyclette équipée d'un frein à tambour dans le moyeu conformément au dispositif selon l'invention ;

   – la figure 5 représente un exemple de fixation de la roue avant au système de direction conforme au dispositif selon l'invention ;

   – la figure 6 représente un autre exemple de fixation de la roue avant au système de direction conforme au dispositif selon l'invention ;

   – la figure 7 représente en coupe un exemple de la partie avant de la bicyclette équipée d'un frein à tambour dans le moyeu conformément au dispositif selon l'invention ;

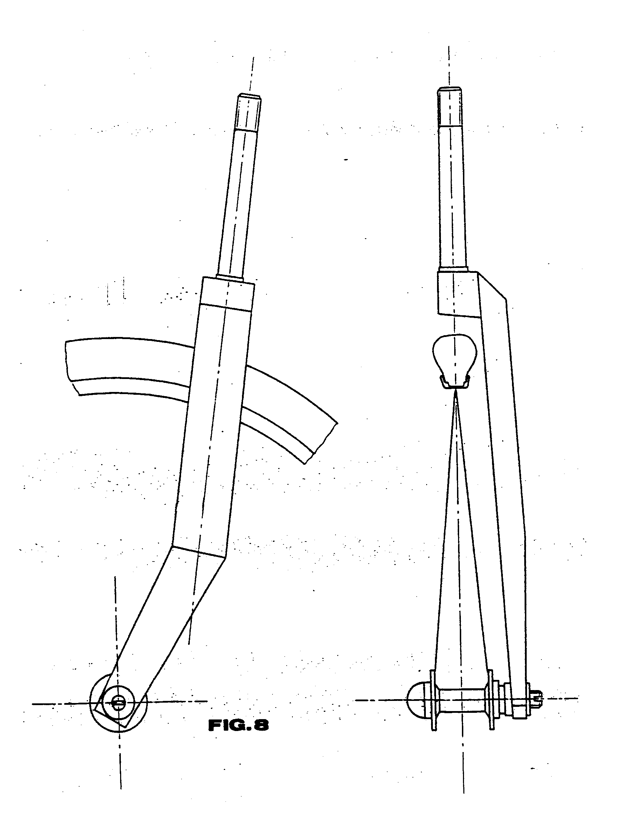

   – les figures 8, 9A et 9B représentent des exemples de réalisation selon l'invention de parties avant de bicyclettes ;

   – la figure 10 représente un exemple de partie supérieure de direction de bicyclette adaptable à toutes les variantes de direction conformes à l'invention, présentant la particularité d'être essentiellement formé d'un seul tube cintré de manière à assurer sa fonction selon l'invention ;

   – la figure 11 représente un exemple de partie arrière de bicyclette équipée selon l'invention d'un frein à tambour dans le moyeu ;

   – la figure 12 représente une variante de la partie arrière d'une bicyclette équipée selon l'invention d'un frein à tambour dans le moyeu ou pas, d'un carter de chaine ou pas, d'un mécanisme de changement de vitesses ou pas ;

   – la figure 13 est une variante de la figure 12 ;

   – la figure 14 est un détail de la figure 3, elle représente en voupe A-A et en section B-B un exemple selon l'invention de support de frein arrière oscillant ;

– la figure 15 représente selon l'invention un exemple d'écrou "imperdable" pour la fixation de roues de bicyclettes conformes aux figures 1, 2, 3, 4, 7, 9B, 11, 12, 13.

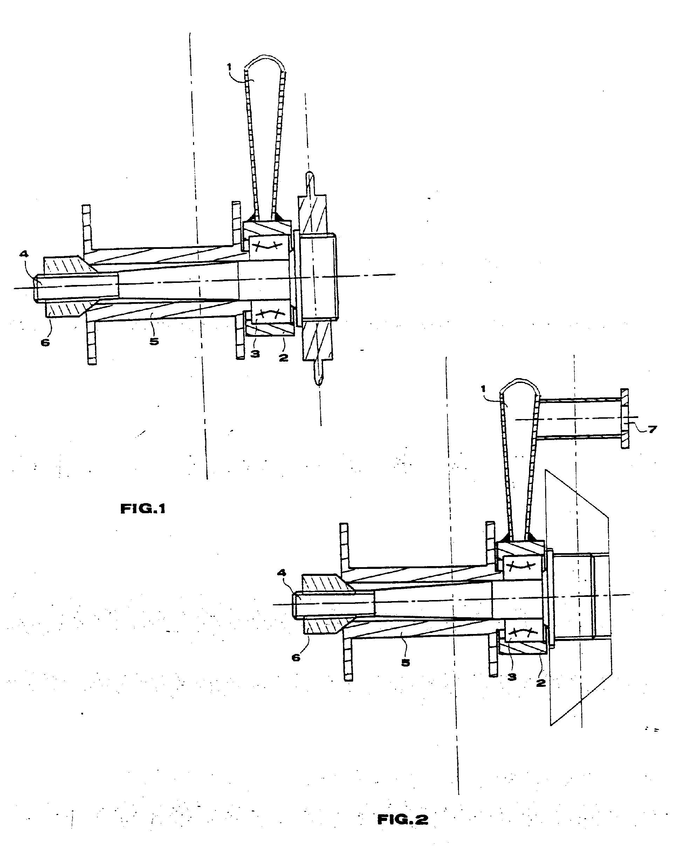

En ce qui concerne la roue arrière, le dispositif comporte un seul bras qui lie la roue arrière au cadre selon la figure 1. Ce bras 1 est fixé sur le boîtier de pédalier du cadre par soudage ou brasage. Sa forme est telle qu'elle permet le passage de la roue arrière et de la chaîne. Ce bras reçoit à son extrémité une douille 2 soudée ou brasée dans laquelle vient se loger un roulement 3.

Ce roulement est arrêté en translation dans son logement par un épaulement et par collage ou alors par un épaulement et sertissage ou encore par un épaulemtn et un anneau ou jonc élastique. Ce roulement est traversé par un axe 4 qui reçoit à son extrémité une roue libre. Sur la partie gauche de cet axe vient se fixer le moyen 5 qui supporte la roue qui peut être de tous les types connus jusqu'à présent. Le tout est fixé ensemble par un écrou 6 à un ou plusieurs filets dont le sens du pas est tel que l'effort de traction assure automatiquement le serrage de l'écrou.

Selon une variante la roue libre peut comporter plusieurs pignons selon la figure 2. La bicyclette est alors équipée d'un mécanisme de changement de vitesses fixé en 7.

Selon une variante la chaîne peut être enveloppée par un carter étanche ou non qui reste en position lors du démontage de la roue arrière.

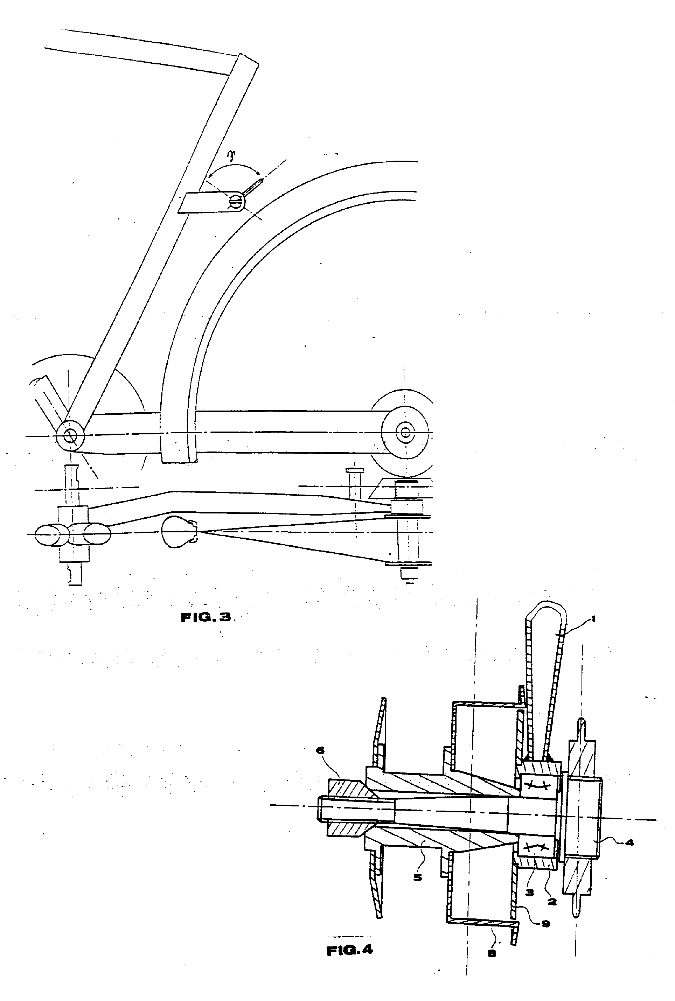

Si la bicyclette est équipée d'un frein arrière classique sur jante, il faut prévoir un mécanisme qui permet au frein de s'effacer lors de la dépose de la roue arrière. Selon la figure 3, une solution est de faire osciller un frein classique sur jante autour d'un axe.

L'amplitude de l'oscillation doit être suffisante pour permettre une dépose facile de la roue arrière.

Sur une bicyclette équipée de ce dispositif, l'extraction de la roue arrière se fait tout d'abord en basculant le frein, il suffit ensuite de démonter l'écrou de fixation de la roue arrière. Il est alors aisé de déposer la roue arrière car la chaîne, le mécanisme de changement de vitesses s'il existe et le carter de chaîne s'il existe restent en place sur la bicyclette. Lors de la repose de la roue arrière sur la bicyclette, il suffit de placer celle-ci sur son axe, de visser l'écrou de fixation jusqu'à ce qu'il soit en contact avec le moyeu de la roue arrière et de basculer le frein arrière pour le remettre en position d'utilisation.

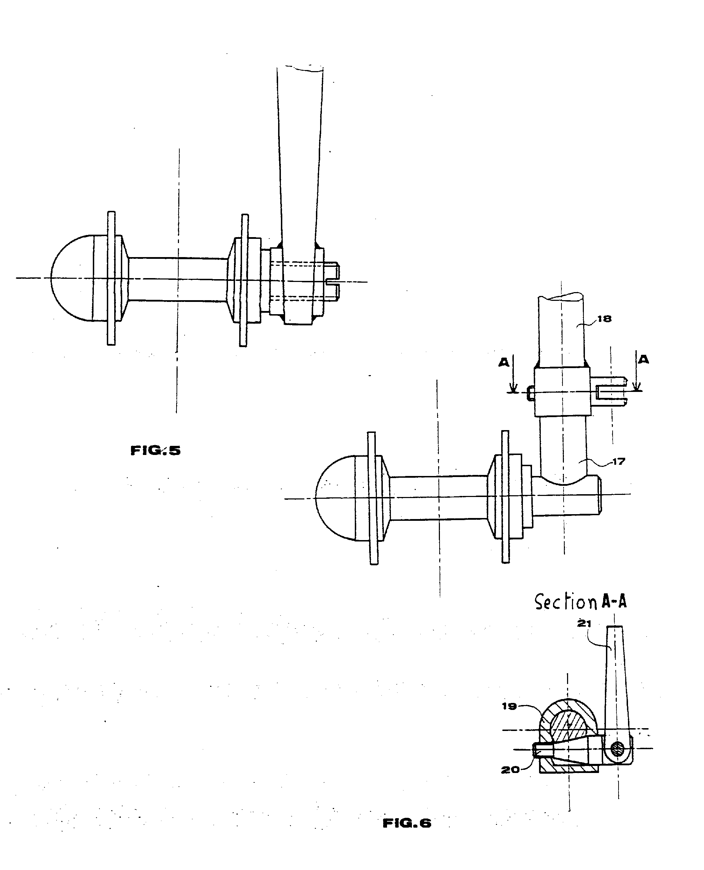

Une variante du système de frein sur la roue arrière consiste à utiliser un frein à tambour dans le moyeu arrière selon la figure 4.

On retrouve un axe, un roulement, une douille soudée ou brasée du cadre. La différence se trouve dans la pièce n° 5 qui est le moyeu de la roue arrière. Sur ce moyeu se trouve le tambour de frein 8. Un flasque 9 qui supporte les garnitures de frein et le mécanisme de commande du frein vient s'encastrer à l'entrée du tambour et se centrer sur la douille 2.

Le flasque 9 est arrêté en rotation par une patte d'ancrage liée au bras qui supporte les roues.

Lors de la dépose de la roue, la chaîne, le carter de chaîne s'il existe, le flasque du frein à tambour, son mécanisme de commande et le système de changement de vitesses s'il existe, restent sur la bicyclette. Pour extraire la roue arrière, il suffit de dévisser l'écrou.

Lors de la repose de la roue arrière, il suffit de mettre en place celle-ci sur son axe sans précautions particulières et de visser à la main l'écrou de fixation de la roue arrière. Le couple de serrage définitif sera obtenu dès les premiers tours de roue, le sens du filetage sur l'axe est tel que l'effort de traction assure automatiquement le serrage de l'écrou.

En ce qui concerne la roue avant, le dispositif selon l'invention comporte un système de direction dont la liaison entre la roue avant et le cadre s'effectue grâce à un bras support relié au tube pivot de direction qui oscille à l'intérieur de la douille du cadre conformément aux solutions connues et utilisées dans la technologie de la bicyclette.

La liaison entre ce bras support et la roue avant qui peut être de tous types connus jusqu'à présent, se fait dans le cas où le frein avant est sur jante, par un filetage entre la partie inférieure du bras support et l'extrémité de l'axe de la roue avant, la figure 5 représente une solution possible ou encore par un emboîtement à la base du bras support la figure 6 représente une solution possible. Si l'axe de la roue avant est fixé par filetage ou par emboîtement à la base du bras support de direction, alors cet axe est fixe en rotation par rapport au cadre. La roue avant et son moyeu tournent alors autour de cet axe par l'intermédiaire de roulement annulaires ou d'un système à billes, cônes et cuvettes qui sont des types de roulements connus et utilisés dans la technologie de la bicyclette. La dépose de la roue avant se fait suivant les solutions proposées soit en dévissant l'axe de roue avant par rapport au bras support, soit en agissant sur la goupille conique figure 6 et un tirant la roue avant vers le bas. La repose de la roue avant s'effectue sans difficultés majeurs dans le sens inverse des opérations de dépose.

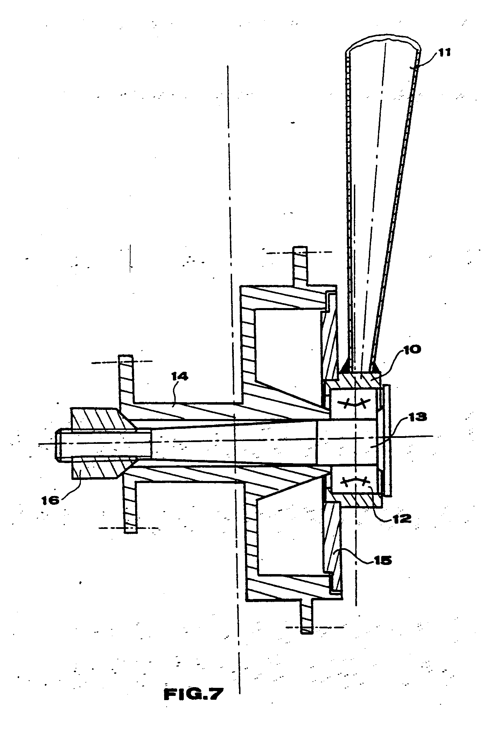

Dans le cas où le frein avant est à tambour dans le moyeu, le dispositif comporte selon la figure 7 douille 10 soudée ou brasée au bras support 11 dans laquelle vient se loger un roulement 12. Ce roulement est arrêté en translation dans son logement par un épaulement et par collage ou alors par un épaulement et sertissage ou encore par un épaulement et un anneau ou jonc élastique.

Ce roulement est traversé par un axe 13 épaulé à son extrémité, sur cet axe vient se fixer le moyeu 14 dans lequel se trouve le tambour de frein. Un flasque 15 qui supporte les garnitures de frein et le mécanisme de commande du frein vient s'encastrer à l'intérieur du tambour et se centrer sur la douille. Le flasque 15 est arrêté en rotation par une patte d'ancrage liée au bras qui supporte la roue. Le tout est assemblé par un écrou 16 à un ou plusieurs filets. Lors de la dépose, il suffit de dévisser l'écrou pour extraire la roue avant instantanément. Le flasque de frein, le mécanisme de commande du frein et l'ancrage du frein sur le support de la roue avant restent en position et ne font l'objet d'aucune manipulation aussi bien à la dépose qu'à la repose de la roue avant. La repose de la roue avant s'effectue dans le sens inverse de l'opération de dépose. Il est à remarquer que l'écrou doit être serré définitivement lors du remontage de la roue avant sur le cadre.

Il est également à remarquer que le dispositif de direction selon l'invention peut se trouver indifféremment à droite ou à gauche de la roue avant, l'important étant d'assurer un bon alignement de la roue avant et de l'axe de symétrie longitudinale de la bicyclette.

Selon une variante du dispositif de liaison entre la roue arrière, la roue avant et leur axe respectif de liaison sur la bicyclette, l'écrou de fixation est monté sur le moyeu des roues de manières à ce qu'il assure toujours sa fonction de serrage et qu'en plus il soit toujours lié à son moyeu en cas de dépose de la roue, de manière à obtenir un écrou "imperdable".

Une variante du dispositif selon l'invention permet d'utiliser lorsque les freins sont à tambour dans le moyeu, des roues identiques pour l'avant et pour l'arrière de la bicyclette donc de fabriquer un seul type de roue pour une bicyclette.

Le dispositif selon l'invention peut s'appliquer à tous les types et à toutes les tailles de bicyclettes qu'elles soient destinées aux adultes, aux enfants, à la compétition, à la randonnée...

Une bicyclette équipée du dispositif selon l'invention peut également recevoir tous les types d'accessoires connus et utilisés dans la technologie de la bicyclette.

On notera également dans les dessins un certain nombre de caractéristiques spécifiques.

Ainsi la figure 5 représente un exemple de fixation de la roue avant au système de direction conforme au dispositif selon l'invention. Le serrage de l'axe de la roue avant sur le système de direction peut être obtenu selon la figure 5 par exemple en utilisant un tournevis que l'on introduit dans la fente à l'extrémité de l'axe de la roue avant. Le serrage de l'axe de la roue avant sur le système de direction peut être obtenu par d'autres moyens que le tournevis sans s'écarter pour autant de l'esprit de l'invention. Il suffit de modifier l'extrémité de l'axe de la roue avant en fonction du moyen de serrage choisi.

De même la figure 6 représente un autre exemple de fixation de la roue avant au système de direction conforme au dispositif selon l'invention. La pièce 17 qui peut être soudée sur l'axe de la roue ou faire partie intégrante de l'axe de roue quand son extrémité est coudée à environ 90° vient s'emboîter à l'intérieur du tube de direction 18 par l'intermédiaire de la pièce 19. La pièce 17 comporte à son extrémité un méplat sur lequel vient s'appuyer la goupille conique 20.

Cette goupille 20 traverse la pièce 19 de part en part, elle possède à une extrémité un filetage et à l'autre l'organe de manoeuvre pivotant 21. Pour déposer la roue, il suffit par exemple de dévisser légèrement la goupille 20 à l'aide de l'organe de manoeuvre 21 et de tirer l'ensemble de la roue vers le bas. L'opération de repose de la roue se fait dans le sens inverse de l'opération de dépose.

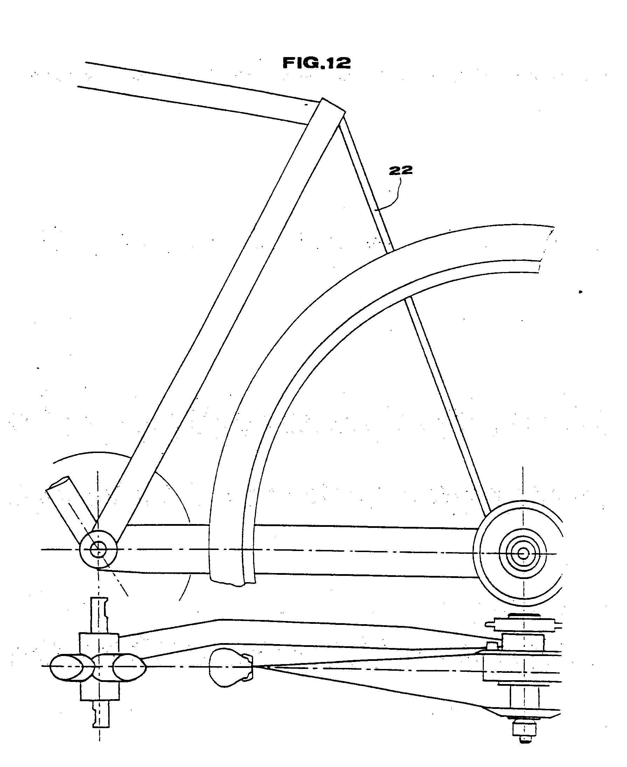

Par ailleurs, la figure 12 représente une variante de la partie arrière d'une bicyclette équipée selon l'invention d'un frein à tambour dans le moyeu ou pas, d'un carter de chaine ou pas, d'une mécanisme de changement de vitesses ou pas,... Quel que soit le type de bicyclette équipée selon l'invention, il est possible par exemple selon la figure 12 de rajouter entre le bras support de roue et le tube de selle du cadre un tube 22 qui rigidifie la partie arrière du cadre et limite les déformations du bras support de roue.

A la figure 14 le support est constitué de deux pattes de fixation 23 fixées par une extrémité sur le tube de selle du cadre, à l'autre extrémité sont fixées deux douilles 24. Ces douilles 24 sont traversées par exemple par une vis 25 à l'extrémité de cette vis se trouve un épaulement sur lequel vient s'appuyer en écrou 26. Cette vis assure la liaison entre les douilles latérales et la douille centrale 27.

La liaison entre la douille 27 et les douilles 24 est telle qu'elle assure une rotation d'angle $\gamma$ et d'axe x'x de la douille 27 et de la vis 25 par rapport au cadre. Le frein arrière sur jante vient se fixer sur ce mécanisme grâce à l'axe 28 qui traverse à la fois les pièces 27 et 25.

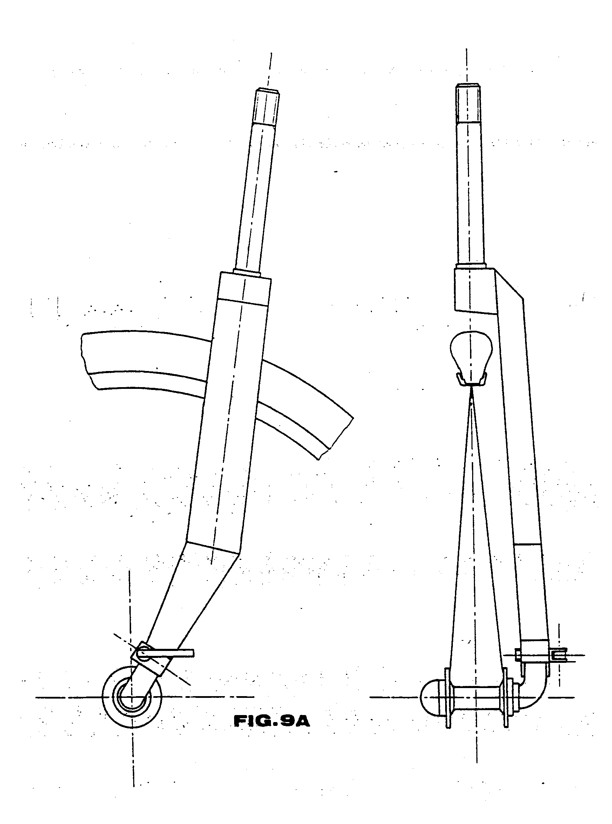

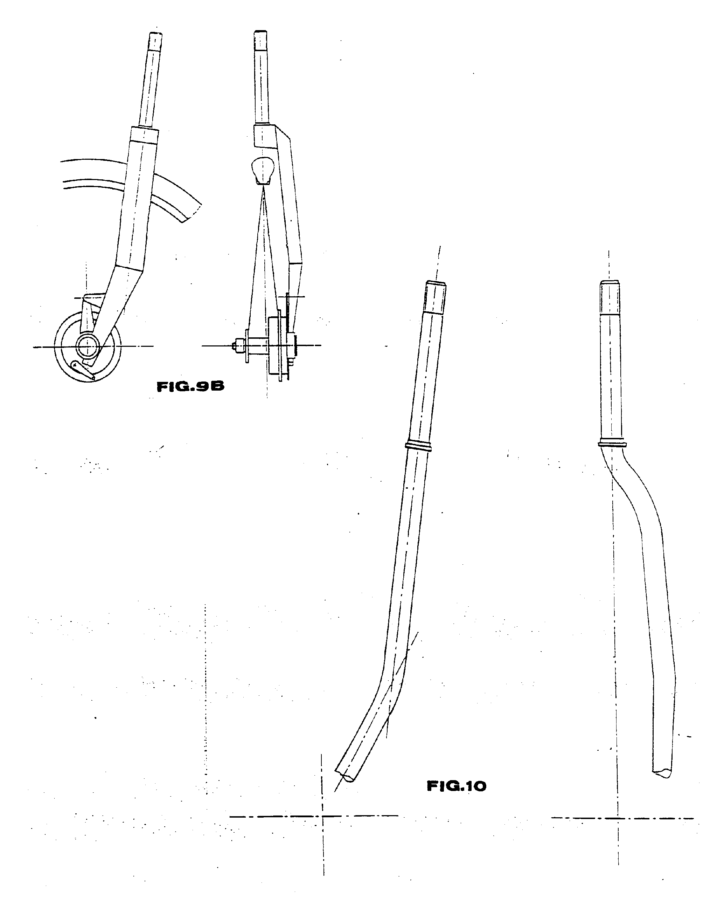

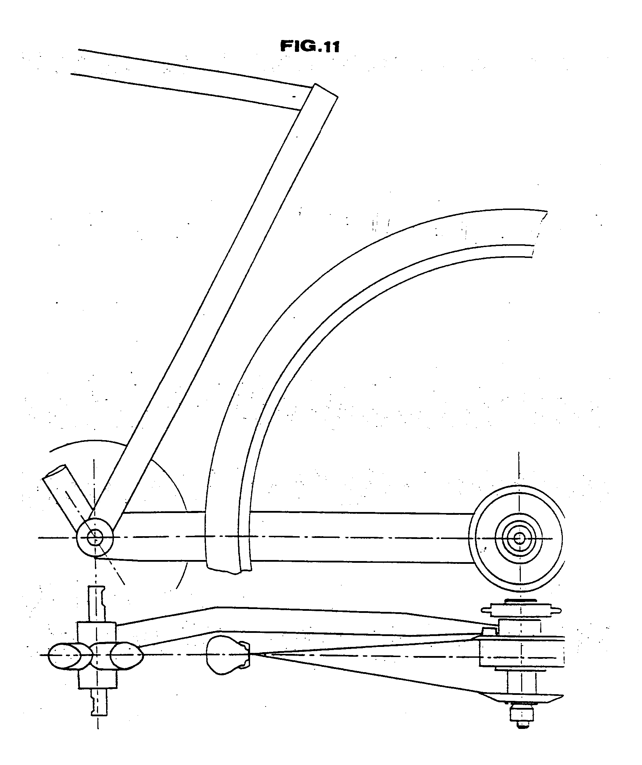

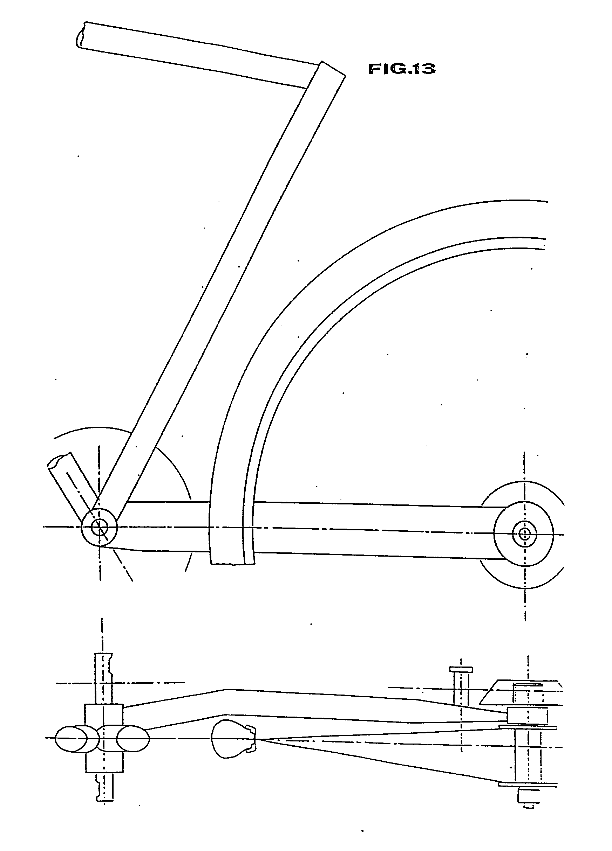

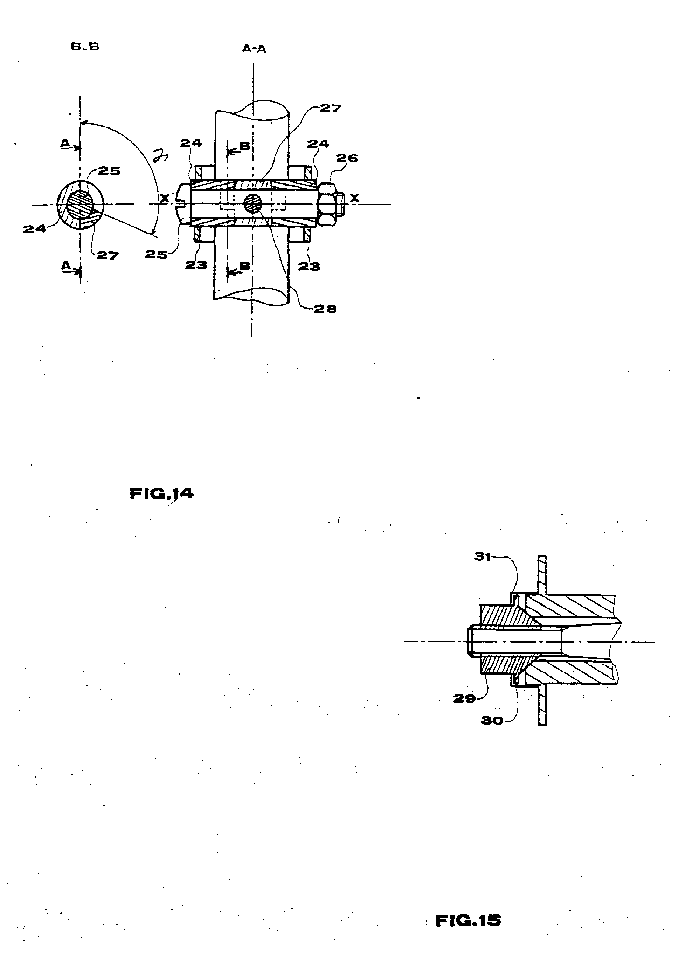

Enfin, la figure 15 représente selon l'invention un exemple d'écrou "imperdable" pour la fixation de roues de bicyclettes conformes aux figures 1, 2, 3, 4, 7, 9B, 11, 12, 13. Un écrou 29 muni d'un épaulement 30 fixe la roue sur la bicyclette. Cet écrou est constamment lié au moyeu de la roue, même en cas de dépose par l'intermédiaire du flasque 31.

## Revendications

1. Bicyclette dont au moins la roue arrière est fixée en porte à faux sur les éléments qui constituent le cadre de la bicyclette, la partie arrière du cadre étant formée d'un bras qui lie la roue arrière au cadre, le bras (1) étant fixé sur le boîter de pédalier du cadre par soudage ou brasage, sa forme étant telle qu'elle permette le passage de la roue arrière et de la chaine, ledit bras recevant à son extrémité une douille (2) soudée ou brasée dans laquelle vient se loger un roulement (3), ladite bicyclette comportant un frein arrière correspondant, caractérisé en ce que le support de frein arrière est constitué de deux pattes de fixation (23) fixées par une extrémité sur le tube de selle du cadre, à l'autre extrémité étant fixées deux douilles latérales (24) traversées par une vis (25), à l'extrémité de cette vis se trouvant un épaulement sur lequel vient s'appuyer un écrou (26), ladite vis assurant la liaison entre les douilles latérales et une douille centrale (27), la liaison étant telle qu'elle assure une rotation d'angle γ autour de l'axe xx' de la douille (27) et de la vis (25) par rapport au cadre, le frein arrière sur jante venant se fixer sur ce mécanisme grâce à un axe 28 qui traverse à la fois les pièces (27) et (25).

2. Bicyclette selon la revendication 1, caractérisé en ce que la roue arrière est fixée sur son axe (4) grâce à un écrou (6) à un ou plusieurs filets dont le sens du filetage est tel que l'effort de traction assure automatiquement le serrage de l'écrou.

3. Bicyclette selon l'une quelconque des revendications 1 et 2, caractérisée en ce qu'un tube (22) fixé entre le bras support de roue et le tube de selle du cadre rigidifie la partie arrière du cadre et limite les déformations.

4. Bicyclette selon la revendication 1 dans laquelle la roue avant est également fixée en porte à faux, caractérisée en ce que le bras support de roue comporte, quand le frein avant est à tambour dans le moyeu, une douille (1) soudée ou brasée au bras support (11), dans laquelle vient se loger un roulement (12), ledit roulement étant arrêté en translation dans son logement et traversé par un axe (13) épaulé à son extrémité, sur lequel vient se fixer le moyeu (14) dans lequel se trouve le tambour de frein, un flasque (15) qui supporte les garnitures de frein et le mécanisme de commande de frein venant s'encastrer à l'intérieur du tambour et se centrer sur la douille, le flasque (15) étant arrêté en rotation par une patte d'ancrage liée au bras qui supporte la roue, l'ensemble étant assemblé par un écrou (16) à un ou plusieurs filets.

**Patentansprüche**

1. Fahrrad, bei dem mindestens das Hinterrad fliegend auf den Elementen gelagert ist, die den Rahmen des Fahrrades bilden, wobei der hintere Abschnitt des Rahmens aus einem Arm besteht, der das Hinterrad mit dem Rahmen verbindet, wobei der Arm (1) auf dem Tretlagergehäuse des Rahmens durch Schweißen oder Löten befestigt ist und seine Form dergestalt ist, daß sie das Hindurchführen des Hinterrades und der Kette gestattet, wobei der Arm an seinem Ende eine angeschweißte oder angelötete Hülse (2) aufnimmt, in der ein Lager (3) angeordnet ist, wobei das Fahrrad eine entsprechende Hinterradbremse aufweist, **dadurch gekennzeichnet**, daß der Träger der Hinterradbremse aus zwei Halteplatten (23) besteht, die mit einem Ende auf dem Sattelrohr des Rahmens befestigt sind und an deren anderem Ende zwei seitliche Hülsen (24) befestigt sind, die von einer Schraube (25) durchquert werden, wobei sich am Ende dieser Schraube eine Schulter befindet, auf der sich eine Mutter (26) abstützt, wobei die Schraube die Verbindung zwischen den seitlichen Hülsen und der mittigen Hülse (27) gewährleistet, wobei die Verbindung dergestalt ist, daß sie eine Drehung der Hülse (27) und der Schraube (25) um einen Winkel γ um die Achse xx' in Bezug auf den Rahmen gewährleistet, und daß die Hinterradfelgenbremse auf dieser Vorrichtung über eine Achse (28) befestigbar ist, die beide Elemente (27) und (25) durchquert.

2. Fahrrad nach Anspruch 1, dadurch gekennzeichnet, daß das Hinterrad auf seiner Achse (4) mit einer Mutter (6) mit einem oder mehreren Gewindegängen befestigt ist, deren Drehungssinn dergestalt ist, daß der Pedalschub automatisch das Anziehen der Mutter gewährlei

3. Fahrrad nach einem der Ansprüche 1 oder 2, dadurch gekennzeichnet, daß ein zwischen dem Tragearm des Rades und dem Sattelrohr des Rahmens befestigtes Rohr (22) den hinteren Abschnitt des Rahmens versteift und Verformungen begrenzt.

4. Fahrrad nach Anspruch 1, bei dem das Vorderrad ebenfalls fliegend gelagert ist, dadurch gekennzeichnet, daß der Trägerarm des Rades, wenn die Vorderradbremse eine Trommelbremse in der Nabe ist, eine an den Trägerarm (11) angeschzeißte oder angelötete Hülse (1) umfaßt, in der ein Lager (12) angeordnet ist, wobei das Lager in Translationsrichtung in seiner Aufnahme gehalten ist und durch eine Achse (13) durchquert wird, die an ihrem Ende, auf dem die Nabe (14) befestigt wird, in der sich die Trommelbremse befindet, einen Flansch (15) anschultert, der den Bremsbelag und die Betätigungsmittel der Bremse trägt, die im Innern der Trommel eingelassen sind und sich auf der Hülse zentrieren, wobei der Flansch (15) in Rotationsrichtung durch eine Ankerplatte gehalten wird, die mit dem Arm verbunden ist, der das Rad trägt, wobei die Einrichtung mit einer Mutter (16) zusammengebaut ist, die eine oder mehrere Gewindegänge aufweist.

**Claims**

1. Bicycle of which at least the rear wheel is fixed in cantilever fashion to the elements constituting the bicycle frame, the rear portion of the frame being formed by an arm which connects the rear wheel to the frame, the arm (1) being fixed to the pedal casing of the frame by welding or soldering, its shape being such that it allows the passage of the rear wheel and of the chain, said arm receiving, at its end, a welded or soldered sleeve (2) in which a bearing (3) is accommodated, said bicycle comprising a corresponding rear brake, characterised in that the rear brake support consists of two fixing tabs (23) fixed by one end on the saddle tube of the frame, two lateral sleeves (24) traversed by a screw (25) being fixed at the other end, a shoulder on which a nut (26) rests being located at the end of this screw, said screw providing the connection between the lateral sleeves and a central sleeve (27), the connection being such that it allows a rotation of angle $\alpha$ round the axis (xx′) of the sleeve (27) and of the screw (25) relative to the frame, the rear brake on the wheel rim being fixed on this mechanism by means of a pin (28) which traverses both part (27) and part (25).

2. Bicycle according to claim 1, characterised in that the rear wheel is fixed on its axle (4) by means of a nut (6) having one or more threads of which the thread direction is such that the pulling force automatically tightens the nut.

3. Bicycle according to any one of claims 1 and 2, characterised in that a tube (22) fixed between the wheel supporting arm and the saddle tube of the frame rigidifies the rear portion of the frame and limits deformations.

4. Bicycle according to claim 1, in which the front wheel is also fixed in cantilever fashion, characterised in that, when the front brake is a drum brake in the hub, the wheel supporting arm comprises a sleeve (1) which is welded or soldered to the supporting arm (11) in which a bearing (12) is accommodated, said bearing having its translation arrested in its housing and being traversed by an axle (13) which is shouldered at its end and on which there is fixed the hub (14) in which the brake drum is located, an end plate (15) which supports the brake linings and the brake control mechanism being fitted inside the drum and being centred on the sleeve, the end plate (15) have its rotation arrested by an anchoring tab connected to the arm which supports the wheel, the unit being joined together by a nut (16) having one or more threads.

**FIG.1**

**FIG.2**

FIG.3

FIG.4

**FIG.5**

**FIG.6**

18

A A

17

Section A-A

21

19

20

FIG.7

FIG.8

FIG. 9A

**FIG.9B**

**FIG.10**

EP 0 284 535 B1

FIG.11

14

# FIG.12

22

FIG.13

**FIG.14**

**FIG.15**